# EUROPEAN PATENT APPLICATION

(11) **EP 4 307 184 A1**
(43) Date of publication of application: **17.01.2024**
(21) Application number: 21930234.6
(22) Date of filing: 12.03.2021
(51) Int. Cl.: G06N 20/00

(54) **FEATURE SELECTION PROGRAM, DEVICE, AND METHOD**

(71) Applicant: FUJITSU LIMITED, Kawasaki-shi, Kanagawa 211-8588 (JP)
(72) Inventor: FUKUDA, Takasabuo, Kawasaki-shi, Kanagawa 211-8588 (JP)
(74) Representative: Hoffmann Eitle
(86) International application number: PCT/JP2021/010196
(87) International publication number: WO 2022/190384

(57) **Abstract**

A feature selection device specifies a feature of a superordinate concept having, as a subordinate concept, a feature included in a feature set obtained from a knowledge graph. Furthermore, when all of a plurality of hypotheses each having a different feature of the subordinate concept and stating that a condition represented by a combination of at least one or more features including the feature of the subordinate concept affects an objective variable are established, the feature selection device determines that a hypothesis obtained by replacing the feature of the subordinate concept with the feature of the superordinate concept is also established, and selects the specified feature of the superordinate concept as a feature to be added to the feature set. When there is a hypothesis including the feature of the subordinate concept that is not established, the hypothesis obtained by replacing the feature of the subordinate concept with the feature of the superordinate concept is not determined to be established, and the specified feature of the superordinate concept is not selected.

## Description

### FIELD

The disclosed technique relates to a feature selection program, a feature selection device, and a feature selection method.

### BACKGROUND

There is technology called explainable artificial intelligence (AI) capable of presenting a basis for an output of a model generated by machine learning. In the explainable AI, for example, a feature (explanatory variable) having a high degree of contribution to the output of the model is specified. Furthermore, there has also been proposed a technique of selecting a feature to be used in the model from among a large number of features for the purpose of improving inference accuracy by the model, improving a degree of certainty of the basis in the explainable AI described above, and the like.

For example, there has been proposed a technique of selecting a feature to be used in the model using an index for evaluating a statistical model such as the Akaike's information criterion (AIC).

### CITATION LIST

### NON-PATENT DOCUMENT

Non-Patent Document 1: H. Akaike, "Information theory and an extension of the maximum likelihood principle", 2nd International Symposium on Information Theory, 267-281, 1973.

Non-Patent Document 2: R. Miyashiro, Y. Takano, "Mixed Integer Second-Order Cone Programming Formulations for Variable Selection in Linear Regression", European Journal of Operational Research, Volume 247, Issue 3, pp. 721-731, 2015.

### SUMMARY

### [TECHNICAL PROBLEM]

However, there is a problem that, even when the feature is selected such that the evaluation indicated by the index such as the AIC described above is enhanced, the selected feature is not necessarily a feature that improves interpretability of the output of the model.

In one aspect, an object of the disclosed technique is to select a feature that improves interpretability of an output of a model.

### [SOLUTION TO PROBLEM]

In one mode, the disclosed technique specifies a feature of a superordinate concept having a feature included in a feature set as a subordinate concept. Furthermore, the disclosed technique determines whether or not establishment/non-establishment of a plurality of hypotheses each having a different feature of the subordinate concept and represented by a combination of at least one or more features including the feature of the subordinate concept with respect to an objective variable satisfies a predetermined condition. The disclosed technique selects the feature of the superordinate concept as a feature to be added to the feature set when the predetermined condition is satisfied.

According to an aspect of the embodiments, a feature selection program that causes a computer to execute a process, the process includes specifying a feature of a superordinate concept that has a feature included in a feature set as a subordinate concept; and selecting the feature of the superordinate concept as a feature to be added to the feature set when establishment or non-establishment of a plurality of hypotheses in which the feature of the subordinate concept is different from each other, the plurality of hypotheses each being represented by a combination of at least one or more features that include the feature of the subordinate concept, with respect to an objective variable satisfies a predetermined condition.

### [ADVANTAGEOUS EFFECTS OF INVENTION]

In one aspect, an effect that a feature that improves interpretability of an output of a model may be selected is exerted.

### BRIEF DESCRIPTION OF DRAWINGS

FIG. 1 is a diagram for explaining a range of a knowledge graph from which a feature is cut out;
FIG. 2 is a diagram illustrating a set of triples included in the knowledge graph;
FIG. 3 is a diagram illustrating exemplary training data;
FIG. 4 is a functional block diagram of a feature selection device;
FIG. 5 is exemplary training data to which a feature of a superordinate concept is added;
FIG. 6 is a diagram illustrating an example of a superordinate/subordinate correspondence TB;
FIG. 7 is a diagram for explaining selection of the feature of the superordinate concept;
FIG. 8 is a diagram illustrating an exemplary rule set;
FIG. 9 is a block diagram illustrating a schematic configuration of a computer that functions as the feature selection device;
FIG. 10 is a flowchart illustrating an exemplary feature selection process;
FIG. 11 is a diagram for explaining another exemplary condition for selecting the feature of the superordinate concept;
FIG. 12 is a diagram for explaining another exemplary condition for selecting the feature of the superordinate concept;
FIG. 13 is a diagram illustrating an exemplary knowledge graph for explaining another example of training data construction; and
FIG. 14 is a diagram illustrating another example of the training data.

### DESCRIPTION OF EMBODIMENTS

Hereinafter, an exemplary embodiment according to the disclosed technique will be described with reference to the drawings.

First, before explaining details of the embodiment, interpretability of an output of a model in explainable AI will be described.

For example, the explainable AI using a model for inferring whether or not a certain professional baseball player achieves a title will be considered. In this case, for example, it is desirable to obtain an explanation that may be interpreted such that a player picked in the first-round draft is likely to achieve a title, a player with a belonging team of team X, who is right-handed, and is from the Hiroshima prefecture is likely to achieve a title, or the like. In the description above, "first-round draft", "belonging team of team X", "right-handed", and "from the Hiroshima prefecture" are features. Such features that affect the objective variable of "whether or not to achieve a title" are used for the model.

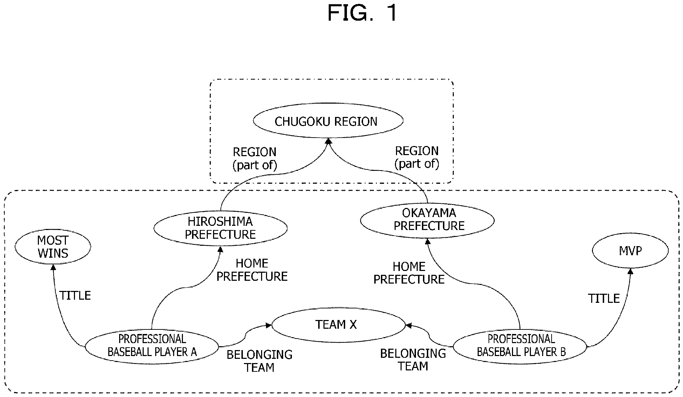

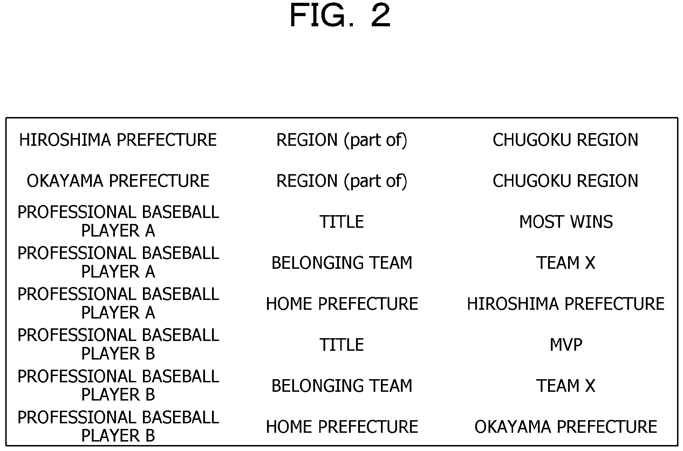

Furthermore, a case of selecting a feature from data in a graph format (hereinafter also simply referred to as a "graph") such as a knowledge graph including a node corresponding to a feature value and an edge coupling nodes with which an attribute indicating a relationship between features is associated will be considered. FIG. 1 illustrates an exemplary graph representing a part of data related to the problem of "whether or not a certain professional baseball player achieves a title" described above. In FIG. 1, an elliptical circle represents a node, a value (character string) in the node represents a feature value, an arrow coupling nodes represents an edge, and a value (character string) written along with the edge represents an attribute. Furthermore, the graph is a set of triples represented by three elements of an edge, and a node on a start point side and a node on an end point side coupled by the edge. FIG. 2 illustrates the set of triples included in the graph in FIG. 1. In the example of FIG. 2, the first column indicates a feature value corresponding to the node (first node) on the start point side of the edge, the second column indicates an attribute of the edge, and the third column indicates a feature value corresponding to the node (second node) on the end point side of the edge. In this triple, the feature of the first node is represented by the attribute of the edge and the feature value of the second node.

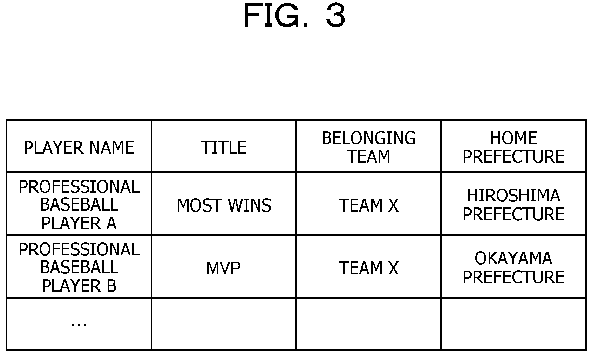

Since the graph may extend in layers in the depth direction and in columns in the width direction depending on the connection between the node and the edge, a huge amount of features may be included in the graph. Thus, it is not realistic to select all the features included in the graph. In view of the above, an optional range of the graph needs to be cut out as a range for selecting the feature. As a simple method of cutting out the graph in an optional range, it is conceivable to cut out a range of features that correspond to a node corresponding to a specific feature value and a node directly coupled by an edge, as indicated by a broken line part in FIG. 1. In other words, a set of triples having the node corresponding to the specific feature value as an element is specified. Here, the specific feature value is a feature value of a player name, such as "professional baseball player A", "professional baseball player B", or the like. In this case, training data as illustrated in FIG. 3 is constructed from the cut out range of the graph. In FIG. 3, a "belonging team" and a "home prefecture" are explanatory variables, and a "title" is an objective variable. In this case, an explanation such as "it is likely to achieve a title when the home prefecture is the Hiroshima prefecture, Okayama prefecture, Tottori prefecture, Shimane prefecture, or Yamaguchi prefecture, and the belonging team is the team X" is obtained as an output of a model. Such an explanation is redundant, and it can hardly be said that the model output has high interpretability. Note that illustration of data of the home prefecture of Tottori prefecture, Shimane prefecture, or Yamaguchi prefecture is omitted in FIG. 1.

In view of the above, selecting a feature in consideration of superordinate and subordinate concepts will be considered. The attribute associated with the edge included in the graph also includes an attribute indicating a superordinate/subordinate conceptual relationship between features. By using it, a feature of a superordinate concept of the previously selected feature is specified as indicated by a dash-dotted line part in FIG. 1. Note that the attribute including "part of" included in FIG. 1 is an exemplary attribute indicating the superordinate/subordinate conceptual relationship. For example, the triple of the node "Hiroshima prefecture" - the edge "region (part of)" - the node "Chugoku region" indicates "Hiroshima prefecture is a part of Chugoku region", which is, there is a relationship that Hiroshima prefecture is a subordinate concept and Chugoku region is a superordinate concept. When the feature of the superordinate concept is selected as a feature to be used for the model, it becomes possible to output an explanation such as "it is likely to achieve a title when the player is from the Chugoku region and the belonging team is the team X" from the model. In this case, as compared with the explanation in the case of using only the features in the broken line part in FIG. 1, the redundancy of the explanation is suppressed, and the interpretability of the model output improves.

It is conceivable to use the AIC described above as a reference as to whether or not to select the feature of the superordinate concept as described above as a feature to be used for the model. The AIC is an index represented by the sum of a term of a logarithmic likelihood indicating a likelihood of the model generated by the selected feature and a term indicating the number of selected features. Specifically, when the AIC is lower in the case where the feature of the superordinate concept is selected than in the case where the features of the subordinate concept are individually selected, it is conceivable to use a method of selecting the feature of the superordinate concept.

Here, when variation in the positive example ratio with respect to the objective variable for each of the individual features of the subordinate concept is small, there is not much difference in the term of the logarithmic likelihood of the AIC between the case where the feature of the superordinate concept is selected and the case where the features of the subordinate concept are individually selected. Therefore, since the number of features is smaller in the case where the feature of the superordinate concept is selected than in the case where the features of the subordinate concept are individually selected, the AIC is lower. As a result, it becomes possible to determine that the feature of the superordinate concept is to be selected. On the other hand, when the variation in the positive example ratio with respect to the objective variable for each of the individual features of the subordinate concept is large, the term of the logarithmic likelihood of the AIC may be smaller in the case where the features of the subordinate concept are individually selected. In this case, the AIC itself may be smaller than in the case where the feature of the superordinate concept is selected. In such a case, it is not determined that the feature of the superordinate concept is to be selected. However, even in the latter case, it is desirable to leave the possibility of selecting the feature of the superordinate concept.

In view of the above, in the present embodiment, it is determined whether or not to select the feature of the superordinate concept as a feature to be used for the model by a method different from the method described above. Hereinafter, the present embodiment will be described in detail.

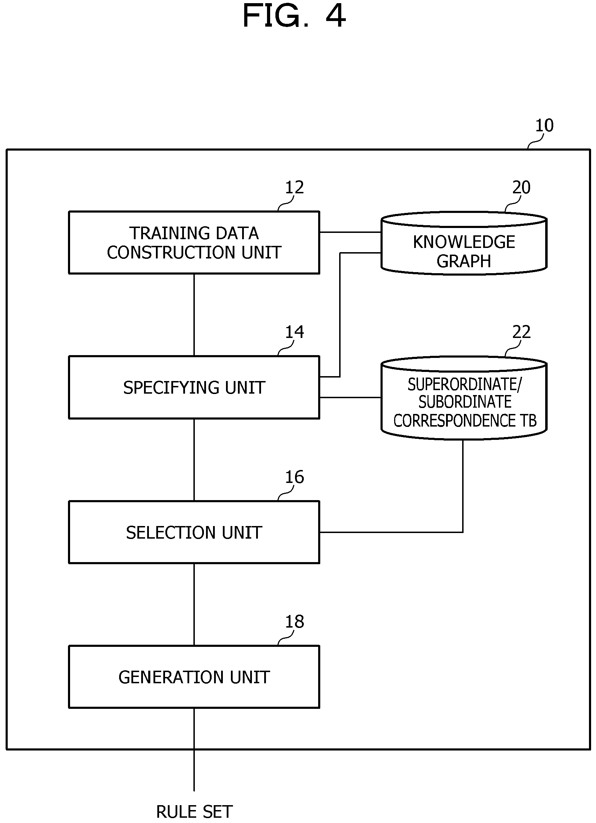

As illustrated in FIG. 4, a feature selection device 10 functionally includes a training data construction unit 12, a specifying unit 14, a selection unit 16, and a generation unit 18. Furthermore, a knowledge graph 20 and a superordinate/subordinate correspondence table (TB) 22 are stored in a predetermined storage area of the feature selection device 10.

As illustrated in FIG. 1, the knowledge graph 20 is a graph that includes a node corresponding to a feature value and an edge associated with an attribute indicating a relationship between nodes including a superordinate-subordinate relationship, and is a graph that represents data to be subject to inference by a model.

The training data construction unit 12 obtains, as a feature set, features included in a specific range cut out from the knowledge graph 20. The training data construction unit 12 constructs training data using the features included in the feature set. For example, as described above, the training data construction unit 12 cuts out a range including a node corresponding to a specific feature value and a node directly coupled to the node by an edge in the knowledge graph 20, as indicated by the broken line part in FIG. 1. In the example of FIG. 1, the specific feature value is a value of a feature "player name", such as "professional baseball player A", "professional baseball player B", or the like. The training data construction unit 12 collects a set of triples (e.g., FIG. 2) included in the cut out range of the graph for each triple including the specific feature value as an element, thereby constructing the training data as illustrated in FIG. 3.

More specifically, the training data construction unit 12 extracts a triple including "professional baseball player A" as an element for the professional baseball player A, and sets an attribute associated with an edge included in the extracted triple as an item name of the feature. Furthermore, the training data construction unit 12 sets a feature value corresponding to another node included in the extracted triple as a value corresponding to the item name of the feature described above. Note that the combination of the item name of the feature and the feature value is an exemplary feature according to the disclosed technique.

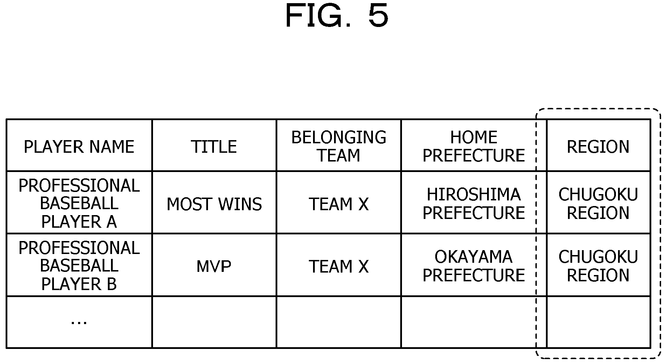

Furthermore, in a case where a feature of a superordinate concept is selected by the selection unit 16 to be described later and is added to the feature set, the training data construction unit 12 adds the item and value of the added feature of the superordinate concept to the training data. FIG. 5 illustrates an example in which a feature of a superordinate concept is added to the training data illustrated in FIG. 3. In FIG. 5, a part indicated by a broken line is an added feature of a superordinate concept.

The specifying unit 14 specifies a feature of a superordinate concept having a feature included in the feature set obtained by the training data construction unit 12 as a subordinate concept. Specifically, the specifying unit 14 determines, for each feature included in the feature set, whether or not there is a node coupled to the node corresponding to the value of the feature by an edge associated with an attribute indicating a superordinate/subordinate conceptual relationship. When the corresponding node exists, the specifying unit 14 specifies the feature corresponding to the node as the feature of the superordinate concept.

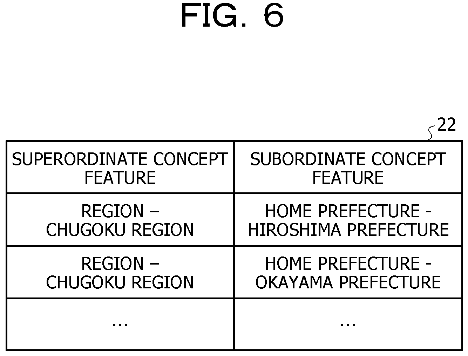

For example, in the example of FIG. 1, the attribute including "part of" is an example of the attribute indicating the superordinate/subordinate conceptual relationship. Accordingly, the specifying unit 14 specifies the feature "region - Chugoku region" of the superordinate concept having the feature "home prefecture - Hiroshima prefecture" as the subordinate concept from the relationship between the nodes coupled by the edge associated with the attribute "region (part of)". Likewise, the specifying unit 14 specifies the feature "region - Chugoku region" of the superordinate concept having the feature "home prefecture - Okayama prefecture" as the subordinate concept. The specifying unit 14 stores, in the superordinate/subordinate correspondence TB 22 as illustrated in FIG. 6, for example, the specified feature of the superordinate concept in association with the feature of the subordinate concept.

The selection unit 16 determines whether or not establishment/non-establishment of a plurality of hypotheses each having a different feature of the subordinate concept and represented by a combination of at least one or more features including the feature of the subordinate concept with respect to the objective variable satisfies a predetermined condition. When the establishment/non-establishment of the hypothesis satisfies the predetermined condition, the selection unit 16 selects the feature of the superordinate concept as a feature to be added to the feature set.

Specifically, the selection unit 16 determines whether or not to select the feature of the superordinate concept based on the idea that "a hypothesis established under the same condition in all subordinate concepts constituting a certain superordinate concept is established under the same condition also in the superordinate concept". For example, the selection unit 16 extracts, for each feature of the superordinate concept stored in the superordinate/subordinate correspondence TB 22, the features of the subordinate concept associated with the feature of the superordinate concept. Hereinafter, the feature of the superordinate concept will be referred to as xₛᵤₚₑᵣ, the feature of the subordinate concept will be referred to as x_{sub}, and a feature other than the subordinate concept included in the feature set will be referred to as x_{nonsub}. Furthermore, when a value of the feature x_{*} is v, it is expressed as x_{*}-v.

For example, features of the subordinate concept of xₛᵤₚₑᵣ-i are assumed to be x_{sub}-j₁, x_{sub}-j₂, ..., and x_{sub}-jₙ (n is the number of features of the subordinate concept of xₛᵤₚₑᵣ-i). A hypothesis that the condition of x_{sub}-jₖ and any x_{nonsub}-a affects an objective variable y is assumed to be established in all k (k = 1, 2, ..., and n). In this case, the selection unit 16 determines that a hypothesis that the condition of xₛᵤₚₑᵣ-i and x_{nonsub}-a affects the objective variable y is established, and selects xₛᵤₚₑᵣ.

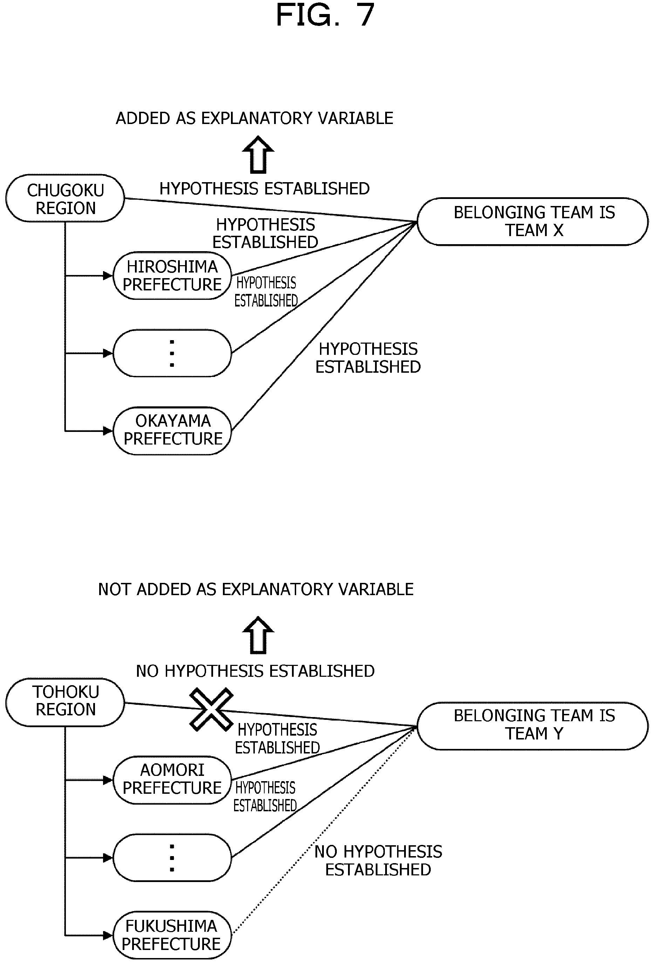

A specific example will be described with reference to FIG. 7. In the upper diagram of FIG. 7, xₛᵤₚₑᵣ is a "region", i is the "Chugoku region", x_{sub} is a "home prefecture", j₁ is the "Hiroshima prefecture",..., and jₙ is the "Okayama prefecture", x_{nonsub} is a "belonging team", and a is the "team X". In this case, a hypothesis including a feature of a subordinate concept is a hypothesis that a professional baseball player whose home prefecture is the Hiroshima prefecture and whose belonging team is the team X is likely to achieve a title, ..., and a hypothesis that a professional baseball player whose home prefecture is the Okayama prefecture and whose belonging team is the team X is likely to achieve a title. When all those hypotheses including the features of the subordinate concept are established, the selection unit 16 determines that a hypothesis that a professional baseball player who is from the Chugoku region and whose belonging team is the team X is likely to achieve a title is established. Then, the selection unit 16 selects the feature "region - Chugoku region" of the superordinate concept as a feature to be added to the feature set.

Furthermore, in the lower diagram of FIG. 7, xₛᵤₚₑᵣ is a "region", i is the "Tohoku region", x_{sub} is a "home prefecture", j₁ is the "Aomori prefecture", ..., and jₙ is the "Fukushima prefecture", x_{nonsub} is a "belonging team", and a is a "team Y". In this case, a hypothesis that a professional baseball player whose home prefecture is the Aomori prefecture and whose belonging team is the team Y is likely to achieve a title, which is a hypothesis including a feature of a subordinate concept, is assumed to be established. On the other hand, a hypothesis that a professional baseball player whose home prefecture is the Fukushima prefecture and whose belonging team is the team Y is likely to achieve a title is not assumed to be established. In this case, the selection unit 16 determines that a hypothesis that a professional baseball player who is from the Tohoku region and whose belonging team is the team Y is likely to achieve a title is not established, and does not select the feature "region - Tohoku region" of the superordinate concept as a feature to be added to the feature set.

The selection unit 16 calculates an influence on the objective variable for each hypothesis to test each hypothesis described above. For example, when the objective variable is a binary classification problem, the influence may be calculated by a t-test or the like based on a ratio of the number of pieces of training data (hereinafter referred to as the "number of positive examples") that is a positive example for the objective variable to the number of pieces of training data and a ratio of the number of positive examples of each hypothesis to the total number of positive examples. Furthermore, for example, the influence may be calculated using a method the explainable AI such as WideLearning (see Reference Documents 1 and 2).
Reference Document 1: Japanese Laid-open Patent Publication No. 2020-46888
Reference Document 2: Hiroaki Iwashita, Takuya Takagi, Hirofumi Suzuki, Keisuke Goto, Kotaro Ohori, Hiroki Arimura, "Efficient Constrained Pattern Mining Using Dynamic Item Ordering for Explainable Classification", arXiv:2004.08015, https://arxiv.org/abs/2004.08015

In a case of using the WideLearning, the selection unit 16 generates conditions represented by exhaustive combinations of features included in the feature set. Furthermore, the selection unit 16 extracts, from the generated conditions, a set of conditions including each of individual features of different subordinate concepts stored in the superordinate/subordinate correspondence TB 22 in association with the feature of the same superordinate concept, the conditions having the same other features among the conditions. In other words, the extracted set of conditions including the features of the subordinate concept is x_{sub}-jₖ (k = 1, 2, ..., and n) and x_{nonsub}-a described above. Then, the selection unit 16 calculates, for each condition, an importance level based on the number of positive examples under each condition. The importance level is a value that increases as the number of positive examples increases. In a case where the ratio of the number of positive examples for each condition to the number of pieces of training data satisfying each condition is equal to or higher than a predetermined value, the selection unit 16 determines that the hypothesis that the condition affects the objective variable is established.

The generation unit 18 generates a rule in which a condition represented by a combination of at least one or more features included in the feature set to which the selected feature of the superordinate concept is added is associated with the objective variable established under the condition. For example, the generation unit 18 may generate the rule using the WideLearning described in relation to the selection unit 16. Specifically, as described above, the generation unit 18 calculates the importance level for each of the conditions represented by exhaustive combinations of features, and generates a rule set using each of conditions whose importance level is equal to or higher than a predetermined value or each of a predetermined number of conditions whose importance level is higher.

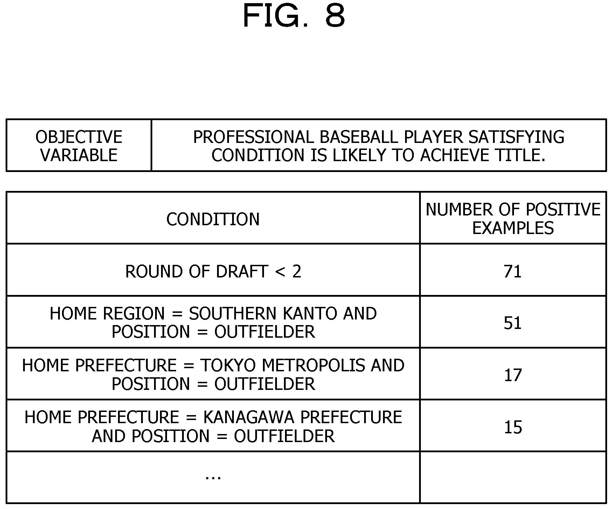

Furthermore, the generation unit 18 assigns, to each rule included in the rule set, an index according to the number of positive examples of the training data satisfying the condition included in the rule, and outputs the rule set. FIG. 8 is a diagram illustrating an example of the rule set to be output. The example of FIG. 8 illustrates an exemplary case where the number of positive examples is assigned as an index for each condition under which a certain objective variable is established. Note that the index is not limited to the number of positive examples itself satisfying the condition, and may be a ratio of the number of positive examples satisfying the condition to the total number of positive examples or the like. Furthermore, in a case where the selection unit 16 generates and tests hypotheses using the WideLearning, the generation unit 18 may divert the hypotheses generated by the selection unit 16 and the calculated importance level for each condition to generate the rule set and the index of each rule.

Here, the rule set is used in the explainable AI, and correctness of the inference target data with respect to the objective variable is output as an inference result according to the matching degree between the inference target data and the rule set. At this time, the rule to which the inference target data is adapted is an explanation indicating the basis for the inference result. In the present embodiment, the feature of the superordinate concept is added without replacing the features of the subordinate concept included in the initial feature set. Therefore, the explanation may be redundant as the amount of information increases, which may lower the interpretability of the model output. In view of the above, the generation unit assigns the index according to the number of positive examples to each rule as described above, whereby it becomes possible to preferentially check a rule with a higher importance level by performing sorting in the order of the index or the like. Since the rule including the feature of the superordinate concept includes the rule including the feature of the subordinate concept with respect to the feature of the superordinate concept, the number of positive examples is larger than that of the rule including the feature of the subordinate concept. Therefore, by performing sorting in the order of the index, it becomes possible to preferentially check the rule including the feature of the superordinate concept.

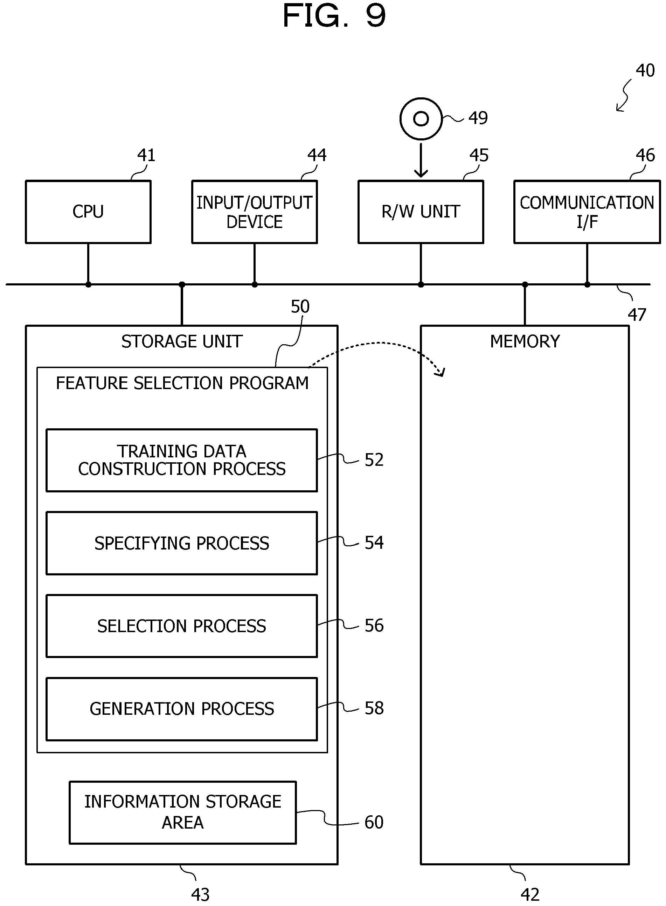

The feature selection device 10 may be implemented by, for example, a computer 40 illustrated in FIG. 9. The computer 40 includes a central processing unit (CPU) 41, a memory 42 as a temporary storage area, and a non-volatile storage unit 43. Furthermore, the computer 40 includes an input/output device 44 such as an input unit or a display unit, and a read/write (R/W) unit 45 that controls reading/writing of data from/to a storage medium 49. Furthermore, the computer 40 includes a communication interface (I/F) 46 to be coupled to a network such as the Internet. The CPU 41, the memory 42, the storage unit 43, the input/output device 44, the R/W unit 45, and the communication I/F 46 are coupled to one another via a bus 47.

The storage unit 43 may be implemented by a hard disk drive (HDD), a solid state drive (SSD), a flash memory, or the like. The storage unit 43 as a storage medium stores a feature selection program 50 for causing the computer 40 to function as the feature selection device 10. The feature selection program 50 includes a training data construction process 52, a specifying process 54, a selection process 56, and a generation process 58. Furthermore, the storage unit 43 has an information storage area 60 in which information constituting each of the knowledge graph 20 and the superordinate/subordinate correspondence TB 22 is stored.

The CPU 41 reads the feature selection program 50 from the storage unit 43, loads it into the memory 42, and sequentially executes the processes included in the feature selection program 50. The CPU 41 operates as the training data construction unit 12 illustrated in FIG. 4 by executing the training data construction process 52. Furthermore, the CPU 41 operates as the specifying unit 14 illustrated in FIG. 4 by executing the specifying process 54. Furthermore, the CPU 41 operates as the selection unit 16 illustrated in FIG. 4 by executing the selection process 56. Furthermore, the CPU 41 operates as the generation unit 18 illustrated in FIG. 4 by executing the generation process 58. Furthermore, the CPU 41 reads information from the information storage area 60, and loads each of the knowledge graph 20 and the superordinate/subordinate correspondence TB 22 into the memory 42. As a result, the computer 40 that has executed the feature selection program 50 is caused to function as the feature selection device 10. Note that the CPU 41 that executes the program is hardware.

Note that the functions implemented by the feature selection program 50 may also be implemented by, for example, a semiconductor integrated circuit, more specifically, an application specific integrated circuit (ASIC) or the like.

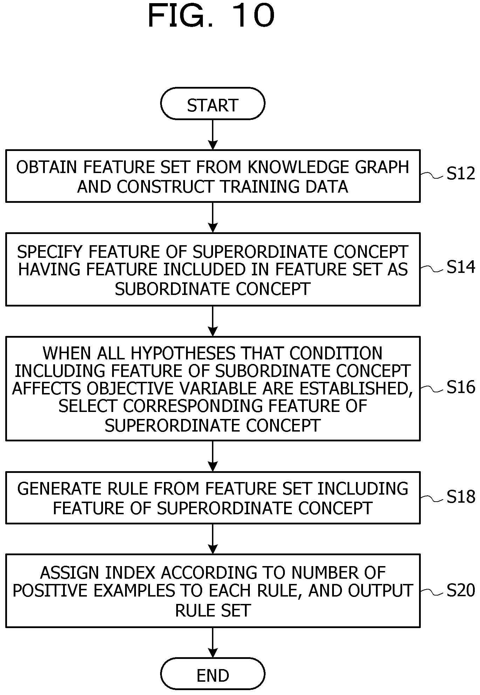

Next, operation of the feature selection device 10 according to the present embodiment will be described. The feature selection device 10 performs a feature selection process illustrated in FIG. 10. Note that the feature selection process is an exemplary feature selection method according to the disclosed technique.

In step S12, the training data construction unit 12 cuts out, from the knowledge graph 20, a range including a node corresponding to a specific feature value and a node directly coupled to the node by an edge. Then, the training data construction unit 12 obtains a feature set included in the cut out range, and constructs training data from the obtained feature set.

Next, in step S14, the specifying unit 14 determines, for each feature included in the feature set obtained in step S12 described above, whether or not there is a node coupled to the node corresponding to the value of the feature by an edge associated with an attribute indicating a superordinate/subordinate conceptual relationship. When the corresponding node exists, the specifying unit 14 specifies the feature corresponding to the node as a feature of a superordinate concept. Then, the specifying unit 14 stores, in the superordinate/subordinate correspondence TB 22, the specified feature of the superordinate concept in association with a feature of a subordinate concept.

Next, in step S16, the selection unit 16 extracts, for each feature of the superordinate concept stored in the superordinate/subordinate correspondence TB 22, the features of the subordinate concept associated with the feature of the superordinate concept. Then, in a case where a hypothesis that a condition including the feature of the subordinate concept affects the objective variable is established in all the conditions including the feature of the subordinate concept, the selection unit 16 selects the feature of the superordinate concept corresponding to the feature of the subordinate concept, and adds it to the feature set. Furthermore, the training data construction unit 12 adds the item and value of the added feature of the superordinate concept to the training data constructed in step S12 described above.

Next, in step S18, the generation unit 18 generates a rule in which a condition represented by a combination of at least one or more features included in the feature set to which the selected feature of the superordinate concept is added is associated with the objective variable established under the condition.

Next, in step S20, the generation unit 18 assigns, to each rule included in the rule set, an index according to the number of positive examples of the training data satisfying the condition included in the rule and outputs the rule set, and the feature selection process is terminated.

As described above, the feature selection device according to the present embodiment specifies a feature of a superordinate concept having a feature included in the feature set as a subordinate concept. Then, the feature selection device determines whether or not establishment/non-establishment of a plurality of hypotheses each having a different feature of the subordinate concept and represented by a combination of at least one or more features including the feature of the subordinate concept with respect to the objective variable satisfies a predetermined condition. When the predetermined condition is satisfied, the feature selection device selects the feature of the superordinate concept as a feature to be added to the feature set. As a result, the feature selection device is enabled to select a feature that improves the interpretability of the model output.

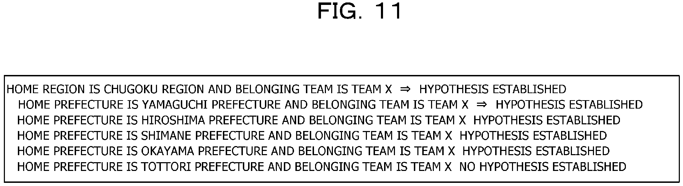

Note that, while the case where, when the hypothesis that all the conditions each including the feature of the subordinate concept affect the objective variable is established, the feature of the superordinate concept corresponding to the feature of the subordinate concept is selected has been described in the embodiment above, it is not limited to this. For example, as illustrated in FIG. 11, when equal to or more than a predetermined rate (e.g., 0.8) of the hypotheses are established among the plurality of hypotheses including the feature of the subordinate concept, the corresponding feature of the superordinate concept may be selected. In the example of FIG. 11, since four hypotheses are established among five hypotheses including the features of the subordinate concept, it is determined that a hypothesis obtained by replacing the features of the subordinate concept with the feature of the superordinate concept is also established.

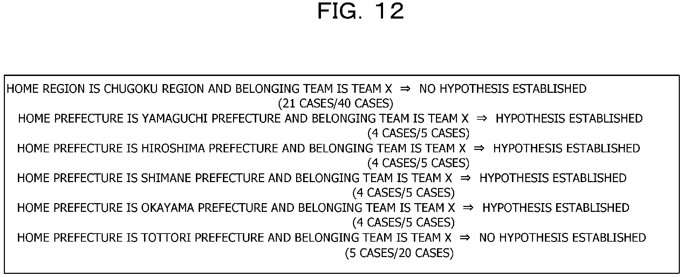

Furthermore, when equal to or more than a predetermined rate (e.g., 0.8) of the hypotheses are established among the hypotheses including the features of the subordinate concept and the hypothesis obtained by replacing the features of the subordinate concept with the feature of the superordinate concept is also established, the feature of the superordinate concept may be selected. This is in consideration of a bias in the number of pieces of training data corresponding to each hypothesis. For example, it is assumed that the hypothesis is determined to be established when the positive example ratio in each condition is equal to or higher than a predetermined value (e.g., 0.8). As illustrated in FIG. 12, even when four hypotheses are established among the five hypotheses including the features of the subordinate concept, the hypothesis obtained by replacing the features of the subordinate concept with the feature of the superordinate concept is not established if the number of pieces of training data satisfying the condition of the hypothesis that is not established is large. In such a case, the feature of the superordinate concept may not be selected. Note that, in FIG. 12, the number of items in the parentheses written along with the individual hypotheses indicates the "number of positive examples of the condition/number of pieces of training data satisfying the condition".

Furthermore, while the case where a specific attribute value included in the knowledge graph, which is the original data, is used as a feature has been described in the embodiment above, it is not limited to this. Presence or absence of a specific attribute, and the number of specific attributes may be used as features. Furthermore, data cleaning processing or the like may be performed on the training data constructed from those features.

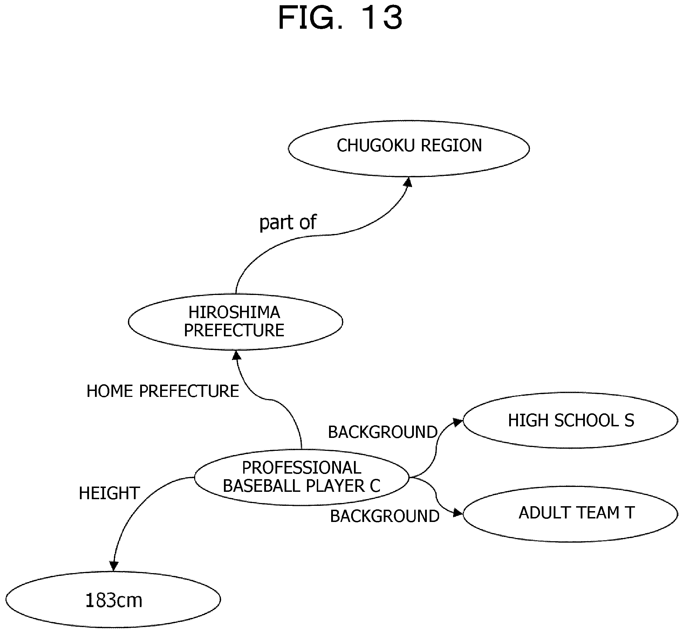

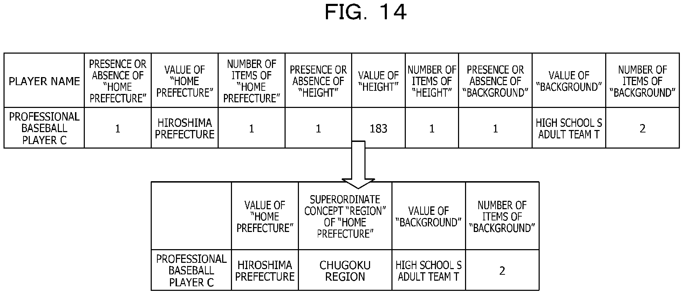

Specific description will be given using a knowledge graph of FIG. 13. FIG. 13 is a part related to a professional baseball player C in the knowledge graph. When a triple having a specific attribute as an element is included in a set of triples constituting the knowledge graph, the training data construction unit extracts a value (e.g., 1) indicating TRUE as a feature indicating the presence or absence of the specific attribute. Furthermore, when a triple having the specific attribute as an element is not included in the set of triples constituting the knowledge graph, the training data construction unit extracts a value (e.g., 0) indicating FALSE as a feature indicating the presence or absence of the specific attribute. Furthermore, the training data construction unit extracts the number of triples having the specific attribute as an element included in the set of triples constituting the knowledge graph as a feature indicating the number of specific attributes. The upper diagram of FIG. 14 illustrates exemplary training data constructed from the knowledge graph illustrated in FIG. 13. In the example of FIG. 14, a term inside "" of an item name of a feature indicates a specific attribute.

Furthermore, features having the same value in all the pieces of training data may be deleted as data cleaning processing for the training data as illustrated in the upper diagram of FIG. 14. Furthermore, features not used for a hypothesis may also be deleted in the generation and testing of the hypothesis performed by the selection unit. The lower diagram of FIG. 14 illustrates the training data after the data cleaning processing, the deletion of the features not used for the hypothesis, and the addition of the feature of the superordinate concept. The lower diagram of FIG. 14 illustrates an example in which the presence or absence of the "home prefecture", the number of items of the "home prefecture", the presence or absence of the "height", the number of items of the "height", and the presence or absence of the "background" are deleted by the data cleaning processing, and the value of the "height" is deleted as a feature not used for the hypothesis. Moreover, the lower diagram of FIG. 14 illustrates the example in which a "region" is added as a feature of a superordinate concept of the "home prefecture".

Furthermore, while a mode in which the feature selection program is stored (installed) in the storage unit in advance has been described in the embodiment above, it is not limited to this. The program according to the disclosed technique may also be provided in a form stored in a storage medium such as a compact disc read only memory (CD-ROM), a digital versatile disc read only memory (DVD-ROM), a universal serial bus (USB) memory, or the like.

### REFERENCE SIGNS LIST

10 Feature selection device
12Training data construction unit
14Specifying unit
16 Selection unit
18Generation unit
20 Knowledge graph
22 Superordinate/subordinate correspondence TB
40Computer
41CPU
42 Memory
43 Storage unit
49Storage medium
50Feature selection program

## Claims

1. A feature selection program that causes a computer to execute a process, the process comprising:
specifying a feature of a superordinate concept that has a feature included in a feature set as a subordinate concept; and
selecting the feature of the superordinate concept as a feature to be added to the feature set when establishment or non-establishment of a plurality of hypotheses in which the feature of the subordinate concept is different from each other, the plurality of hypotheses each being represented by a combination of at least one or more features that include the feature of the subordinate concept, with respect to an objective variable satisfies a predetermined condition.

2. The feature selection program according to claim 1, wherein the predetermined condition includes a case where equal to or more than a predetermined rate of the hypotheses among the plurality of hypotheses are established.

3. The feature selection program according to claim 1, wherein the predetermined condition includes a case where equal to or more than a predetermined rate of the hypotheses among the plurality of hypotheses are established and a hypothesis obtained by replacing the feature of the subordinate concept with the feature of the superordinate concept is established.

4. The feature selection program according to any one of claims 1 to 3, wherein in a graph that includes a node that corresponds to a feature value and an edge associated with an attribute that indicates a relationship between nodes that includes a superordinate-subordinate relationship, the specifying includes specifying the feature that corresponds to the node coupled to the node that corresponds to the feature value included in the feature set by the edge associated with the attribute that indicates the superordinate-subordinate relationship.

5. The feature selection program according to claim 4, wherein the feature set includes the feature that corresponds to the node directly coupled to the node that corresponds to a specific feature value by the edge in the graph.

6. The feature selection program according to any one of claims 1 to 5, wherein the process further comprising
generating a set of rules in which a condition represented by the combination of at least one or more features included in the feature set to which the selected feature of the superordinate concept is added is associated with the objective variable established under the condition.

7. The feature selection program according to claim 6, wherein the generating includes assigning, to each of the rules included in the set of the rules, an index according to a number of pieces of data that are positive examples with respect to the objective variable, the data satisfying the condition included in the rule, and outputs the rules.

8. A feature selection device comprising:
a specifying unit that specifies a feature of a superordinate concept that has a feature included in a feature set as a subordinate concept; and
a selection unit that selects the feature of the superordinate concept as a feature to be added to the feature set when establishment or non-establishment of a plurality of hypotheses in which the feature of the subordinate concept is different from each other, the plurality of hypotheses each being represented by a combination of at least one or more features that include the feature of the subordinate concept, with respect to an objective variable satisfies a predetermined condition.

9. The feature selection device according to claim 8, wherein the predetermined condition includes a case where equal to or more than a predetermined rate of the hypotheses among the plurality of hypotheses are established.

10. The feature selection device according to claim 8, wherein the predetermined condition includes a case where equal to or more than a predetermined rate of the hypotheses among the plurality of hypotheses are established and a hypothesis obtained by replacing the feature of the subordinate concept with the feature of the superordinate concept is established.

11. The feature selection device according to any one of claims 8 to 10, wherein in a graph that includes a node that corresponds to a feature value and an edge associated with an attribute that indicates a relationship between nodes that includes a superordinate-subordinate relationship, the specifying unit specifies the feature that corresponds to the node coupled to the node that corresponds to the feature value included in the feature set by the edge associated with the attribute that indicates the superordinate-subordinate relationship.

12. The feature selection device according to claim 11, wherein the feature set includes the feature that corresponds to the node directly coupled to the node that corresponds to a specific feature value by the edge in the graph.

13. The feature selection device according to any one of claims 8 to 12, further comprising: a generation unit that generates a set of rules in which a condition represented by the combination of at least one or more features included in the feature set to which the selected feature of the superordinate concept is added is associated with the objective variable established under the condition.

14. The feature selection device according to claim 13, wherein the generation unit assigns, to each of the rules included in the set of the rules, an index according to a number of pieces of data that are positive examples with respect to the objective variable, the data satisfying the condition included in the rule, and outputs the rules.

15. A feature selection method for a computer to execute a process comprising:
specifying a feature of a superordinate concept that has a feature included in a feature set as a subordinate concept; and
selecting the feature of the superordinate concept as a feature to be added to the feature set when establishment or non-establishment of a plurality of hypotheses in which the feature of the subordinate concept is different from each other, the plurality of hypotheses each being represented by a combination of at least one or more features that include the feature of the subordinate concept, with respect to an objective variable satisfies a predetermined condition.

16. The feature selection method according to claim 15, wherein the predetermined condition includes a case where equal to or more than a predetermined rate of the hypotheses among the plurality of hypotheses are established.

17. The feature selection method according to claim 15, wherein the predetermined condition includes a case where equal to or more than a predetermined rate of the hypotheses among the plurality of hypotheses are established and a hypothesis obtained by replacing the feature of the subordinate concept with the feature of the superordinate concept is established.

18. The feature selection method according to any one of claims 15 to 17, wherein in a graph that includes a node that corresponds to a feature value and an edge associated with an attribute that indicates a relationship between nodes that includes a superordinate-subordinate relationship, the specifying includes specifying the feature that corresponds to the node coupled to the node that corresponds to the feature value included in the feature set by the edge associated with the attribute that indicates the superordinate-subordinate relationship.

19. The feature selection method according to claim 18, wherein the feature set includes the feature that corresponds to the node directly coupled to the node that corresponds to a specific feature value by the edge in the graph.

20. A storage medium storing a feature selection program that causes a computer to execute a process, the process comprising:
specifying a feature of a superordinate concept that has a feature included in a feature set as a subordinate concept; and
selecting the feature of the superordinate concept as a feature to be added to the feature set when establishment or non-establishment of a plurality of hypotheses in which the feature of the subordinate concept is different from each other, the plurality of hypotheses each being represented by a combination of at least one or more features that include the feature of the subordinate concept, with respect to an objective variable satisfies a predetermined condition.
